# EUROPEAN PATENT SPECIFICATION

(11) **EP 2 123 383 B1**
(45) Date of publication and mention of the grant of the patent: **16.02.2011**
(21) Application number: 08104034.7
(22) Date of filing: 20.05.2008
(51) Int. Cl.: B23D 51/10

(54) **Electrical device having a tool retention assembly**
Elektrische Vorrichtung mit Werkzeughalteanordnung
Dispositif électrique ayant un ensemble de retenue d'outil

(43) Date of publication of application: 25.11.2009
(73) Proprietor: Robert Bosch GmbH, 70442 Stuttgart (DE)
(72) Inventor: David, Szilard, 6900, Hungary (HU); Rakaczki, Janos, 3521, Miskolc (HU)

(56) References cited:
- EP-A- 1 435 273
- WO-A-2007/137900

## Description

### PRIOR ART

The present invention relates to electrical devices according to the preamble of claim 1, such as jigsaws, reciprocating saws, or so-called multipurpose saws or "multisaws" which may be used for cutting through wood, metal or plastic. WO 2007/137900 A1 discloses such an electrical device. An ideal tool holder retains a tool securely and is "tool-less", that is, it requires no separate hand tools for mounting or removing a tool, such as a saw blade or tool bit. In the case of retaining a saw blade, it is common for tool-less blade retention assemblies to rely on passing a protrusion through a cavity in the blade. Means are further provided for adjusting the position of the protrusion for mounting and dismounting the blade. WO 2007/137900 A1 discloses a saw blade holder which has a slidable clamping member for passing through a securing hole in the saw blade to effectively lock it into position relative to other positioning features in the blade holder. A "C"-ring is used to couple a separate adjustment member with the clamping member. When such a retaining assembly is utilized, the clamping member is likely to be subjected to stress and/or vibration during actual use of the saw blade. Therefore the means for supporting and adjusting the clamping member must be secure. On the other hand, from a design standpoint it is often preferable to minimize the use of separate support parts in order to reduce manufacturing and assembly costs.

### ADVANTAGES OF THE INVENTION

An electrical device is described which may be, for example, a powered hand-held device with a removable tool. For retaining the tool, a tool retention assembly is provided comprising a tool holder which defines a channel for axial insertion of a tool along an insertion axis and a clamping member adjustable along a clamping axis that is oriented perpendicular to the insertion axis, wherein the clamping member in a retaining position passes through the channel for retaining a tool inserted into the holder and wherein the clamping member in a releasing position does not pass through the channel so that a tool can be inserted or removed from the holder. Also provided is a biasing member for urging the clamping member into the retaining position and an extractor coupled to the clamping member for moving the clamping member from the retaining position into the releasing position. So that the extractor and clamping member can be coupled to each other securely and without requiring additional parts, one of the extractor and the clamping member has a neck portion narrower than an adjacent head portion and the other one of the extractor and the clamping member has an inner surface having a complementary shape to the neck portion which abuts the neck portion.

An additional advantage of this arrangement is that the extractor is always coupled with a particular portion of the clamping member. Therefore when an external sliding switch is utilized by the user, it can be certain that sliding of the switch will translate not only to movement of the extractor, but to movement of the clamping member. Without a tight coupling between extractor and clamping member, the parts may slide relative to each other or become stuck in an inappropriate configuration.

The advantageous arrangement may be realized in two ways. In one possibility, the clamping member has the neck portion and the head portion and the extractor has the inner surface. In the other, the extractor has the neck portion and the head portion and the clamping member has the inner surface. In either case, assembly is facilitated and potentially no further securing parts will be necessary if one of these parts is flexible. The flexibility may be achieved on the part having the inner surface by providing this part with two flexible arms onto which the inner surface is provided and which in the assembled form will abut the neck portion. Alternatively, the neck portion may itself comprise two flexible arms each of which abut the inner surface.

Since the clamping member by passing through the channel may be in direct contact with the tool, it may be preferable if the clamping member is made of a hard, inflexible material. Therefore configurations in which the extractor, rather than the clamping member, is flexible are advantageous. This may be realized by providing the extractor with two flexible arms that abut the neck portion of the clamping member or by providing the extractor with two flexible arms that pass though the clamping member.

So that the coupling between the extractor and clamping member is secure, it is advantageous if the inner surface substantially surrounds the neck portion. The greater the contact area there is between the parts, the more secure is the coupling. In some configurations, the inner surface fully surrounds the neck portion.

Although the neck portion and complementarily shaped inner surface may take on a variety of different shapes, it is advantageous from an assembly standpoint if the neck portion has a substantially conical shape. In so far as portions of the parts must be flexed during assembly, a conical shape provides a camming, ramping effect that gradually urges the flexible portions apart or together as the case may be.

It the surface defined by the conically shaped neck portion has too large an angle relative to the clamping axis, the camming effect may not be as effective. If the angle is too small, the neck portion must be rather long relative to the clamping axis. This is because the neck region must provide sufficient narrowing so that the difference between the thickness of the neck region and head region is such that the parts will not decouple in a direction opposite the direction of assembly. As such, 16 degrees provides a compromise between these two factors, although other angles in the range of 10-25 degrees provide reasonable alternatives.

In every embodiment disclosed, the extractor and clamping member are oriented transversely. It is advantageous if a portion of the extractor acts bears against a portion of the clamping member, in order to urge the clamping member into a releasing position. In certain cases this portion of the clamping member is the head portion that is adjacent the neck portion coupled with the extractor. In other cases, wherein the extractor passes through the clamping member, a portion of the clamping member opposite the tool functions similarly to the head portion.

### DRAWINGS

Figure 1 is a perspective view of the underside of a hand-held power tool according to the present invention.
Figure 2 is a perspective view of a first embodiment for a blade clamp assembly with an inserted saw blade.
Figure 3 is a perspective view of the underside of a hand-held power tool with a portion of the device housing removed.

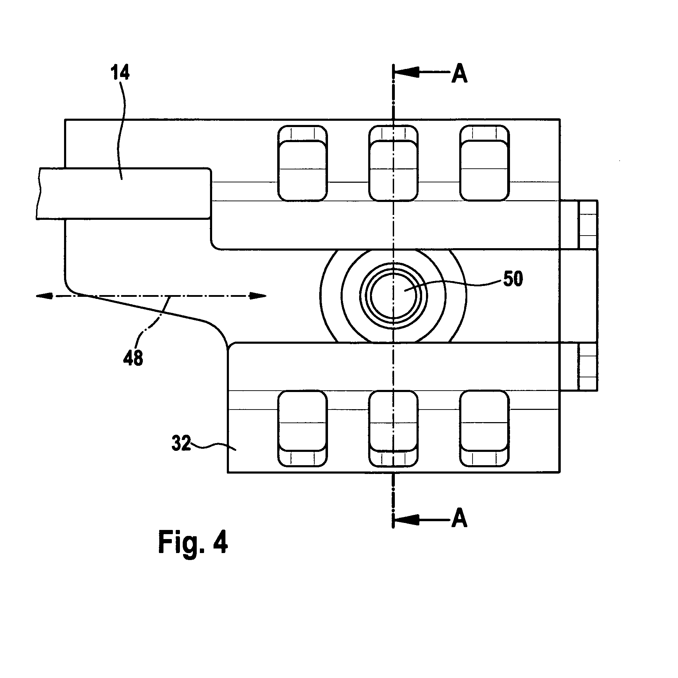

Figure 4 is a side view of a first embodiment for a blade clamp assembly.
Figure 5 is a section view of a first embodiment for a blade clamp assembly taken along line A-A in Figure 4.
Figure 6 is a section view of a second embodiment for a blade clamp assembly taken at a position equivalent to line A-A in Figure 4.
Figure 7 is a section view of a third embodiment for a blade clamp assembly taken at a position equivalent to line A-A in Figure 4.
Figure 8 is a section view of a second embodiment for a blade clamp assembly taken at a position equivalent to line B-B in Figure 5.
Figure 9 is an exploded view of a first embodiment of the blade clamp assembly.

### DESCRIPTION OF THE PREFERRED EMBODIMENTS

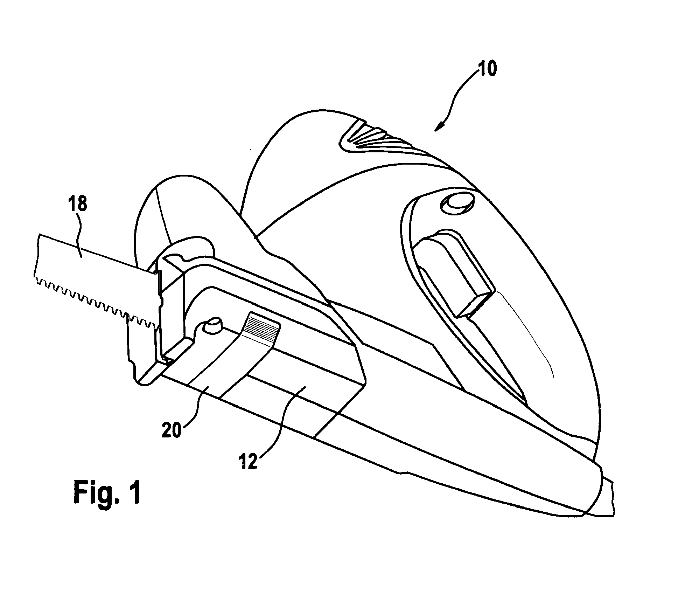

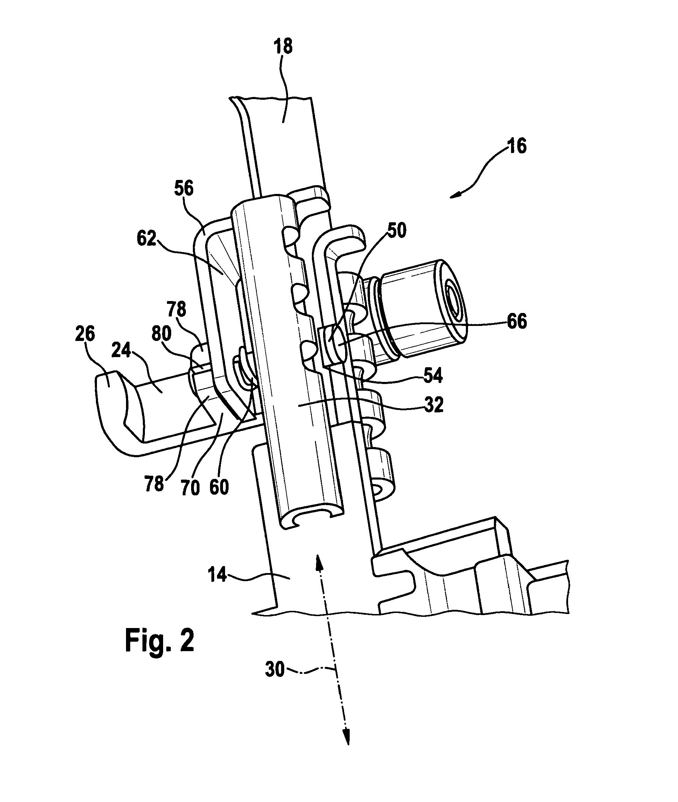

An electrical device, in this case a multipurpose powered saw 10, is shown in Fig. 1. Within the device housing 12 there is a motor (not shown) for providing reciprocating action to a driven shaft 14 having a blade retention assembly 16 for releasably retaining a saw blade 18 (see Fig. 2). Means for interfacing with blade retention assembly 16, in this case in the form of a sliding switch 20, are provided on the surface of device housing 12.

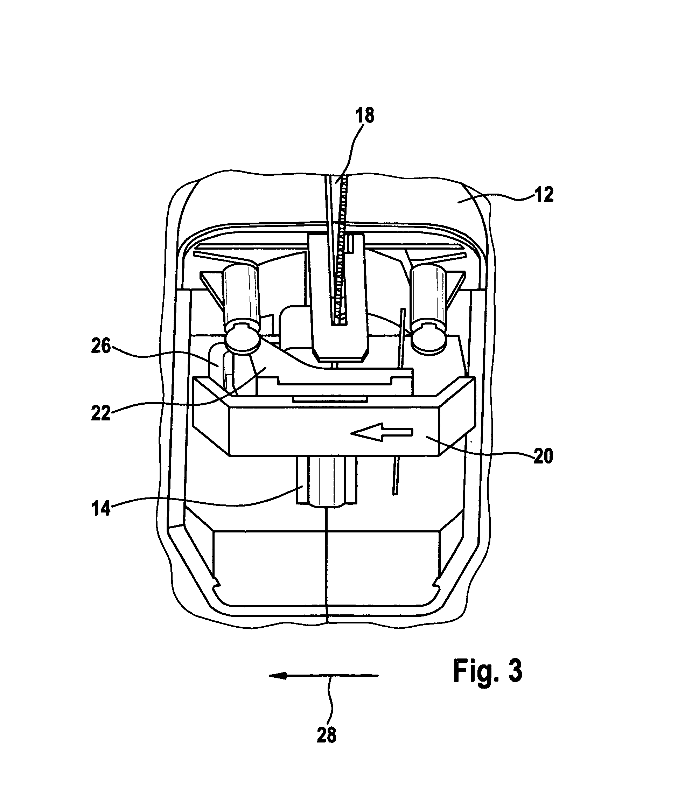

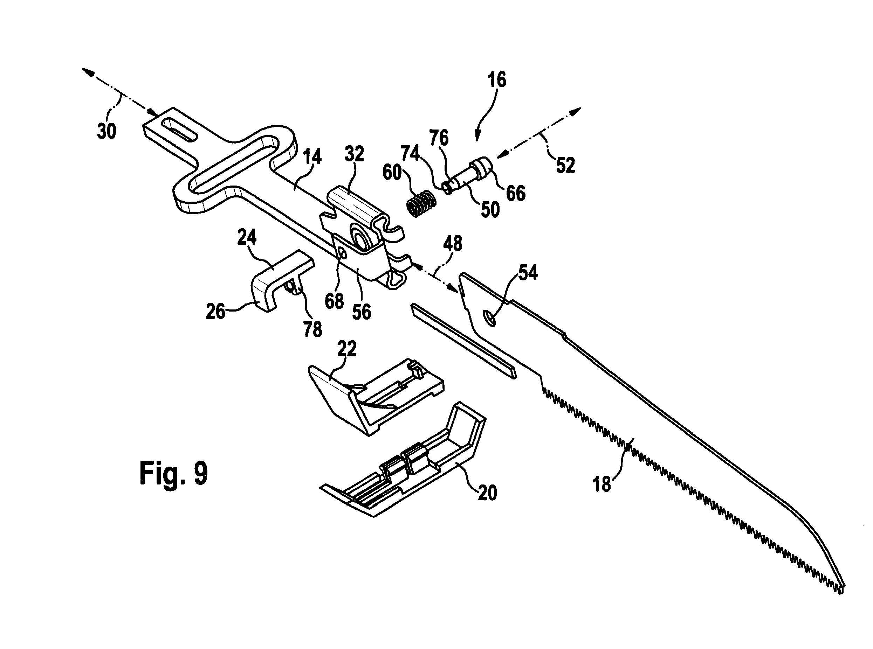

An arm 22 that is either intrinsic to or rigidly coupled with sliding switch 20 extends into the region of an extractor 24 which forms a portion of blade retention assembly 16 (see Figs. 3 and 9). In the default position of sliding switch 20, arm 22 and extractor 24 are not in contact so that driven shaft 14 can freely reciprocate while saw 10 is operating and also so that sliding switch 20 is vibrationally isolated from saw blade 18. However, when saw 10 is not operating, arm 20 is positioned directly adjacent a hook portion 26 of extractor 24, so that when sliding switch 20 is moved by the user in the direction of arrow 28, arm 22 will contact hook portion 26 and move it also in the same direction, which is perpendicular to the reciprocating axis 30 of driven shaft 14 (see Fig. 2).

Blade retention assembly 16 will now be described in more detail and is best visualized in Figs. 2, 5, and 9. A blade holder 32 is shaped to orient saw blade 18 upon insertion. The positions of generally flat lateral surfaces 34 and 36, top surfaces 38 and 40, and generally flat bottom surfaces 42 and 44 are chosen to be complementary with the dimensions of saw blade 18. Together they may be used to define a rectangular channel 46 that surrounds a saw blade insertion axis 48 that is parallel to reciprocating axis 30. Once saw blade 18 is received into channel 46, it is restrained from movement except in the axial direction along insertion axis 48. To retain saw blade 18 in a particular axial position, a generally pin-shaped clamping member 50 is positioned so that it may pass through channel 46 in blade holder 32 such that a clamping axis 52 is perpendicular to insertion axis 42. A corresponding circular hole 54 in saw blade 18 is shaped to receive clamping member 50.

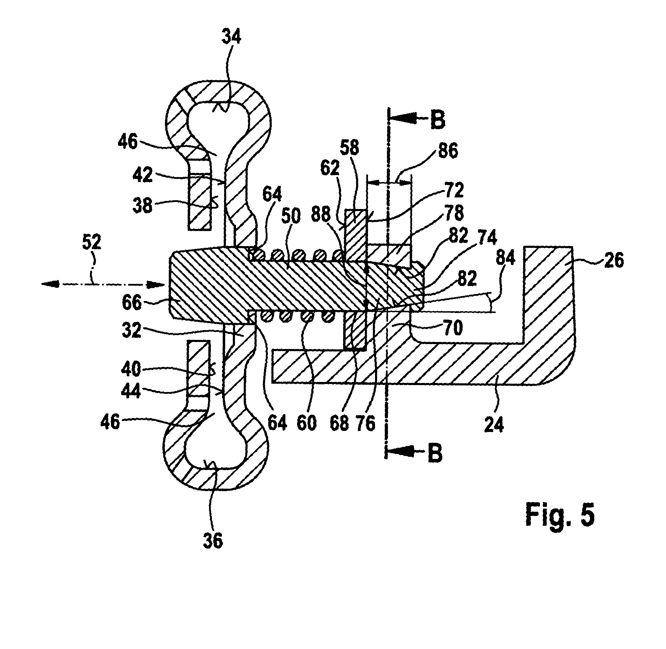

To secure saw blade 18 so that saw 10 may be operated, clamping member 50 should be in a retaining position (see Fig. 5) wherein it extends through channel 46. Emerging preferably as a monolithic extension of holder 32 is an L-shaped arm 56 that creates a fix point 58. A compression spring 60 that is positioned between an inner surface 62 of fix point 58 and a shoulder 64 of clamping member 50 so that it biases clamping member 50 into the retaining position. Since the end portion 66 of clamping member 50 has a generally conical shape sufficiently large so that it cannot pass completely through circular hole 54, it is capable of creating a wedging action upon saw blade 18. Clamping member passes through a cavity 68 in fix point 58 and its further movement is limited by the fact that it is coupled on the other side of fix point 58 with extractor 24. As such, a fastening portion 70 of extractor 24 contacts an outer surface 72 of fix point 58 restricting further movement of clamping member 50 along clamping axis 52.

To respectively insert or remove saw blade 18 from saw 10, the user of saw 10 should move sliding switch 20. As described previously, arm 22 will urge extractor 24 to move clamping member 50 against the force of spring 60 into a releasing position so that it no longer extends into channel 46. After a saw blade 18 is inserted or removed, sliding switch 20 is released by the user and the force of spring 60 drives clamping member 50 through circular hole 54 in order to wedge and securely clamp saw blade 18.

Clamping member 50 is made of a rigid material such as a hard metal. Opposite its end portion 66, clamping member 50 has a substantially cylindrically shaped head portion 74 and adjacent to it a substantially conically shaped neck portion 76. The neck portion 76 is generally narrowed versus the head portion 74. Extractor 24 is made of a flexible plastic material and fastening portion 70 is actually bifurcated into two arm portions 78 with a gap 80 between them. The inner surfaces 82 of the arm portions 78 are shaped to be substantially complementary with the conical shape of the neck portion 76. The coupling between clamping member 50 and extractor 24 is via a snap-fit arrangement. Although head portion 74 is larger than the space between the arm portions 78, extractor 24 is flexible, so that the arm portions 78 spread during assembly to accommodate insertion of head portion 74. Conically shaped inner surfaces 82 actually facilitate the spreading of arm portion 78.

Afterwards, arm portions 78 resiliently return to their original shape so that inner surfaces 82 abut and essentially grip neck portion 76. The shapes of arm portions 78 and neck portion 76 are substantially complementary both in terms of the angle 84 of the conical shape, which in both cases is 16 degrees, and in terms of the thickness 86 of neck portion 76 and arm portions 78, which are each about 70% of the thickness 88 of clamping member 50 at the widest aspect of its neck portion 76 (see Fig. 5). As such, the coupling established between clamping member 50 and extractor 24 is rigid and does not permit relative movement between the two parts.

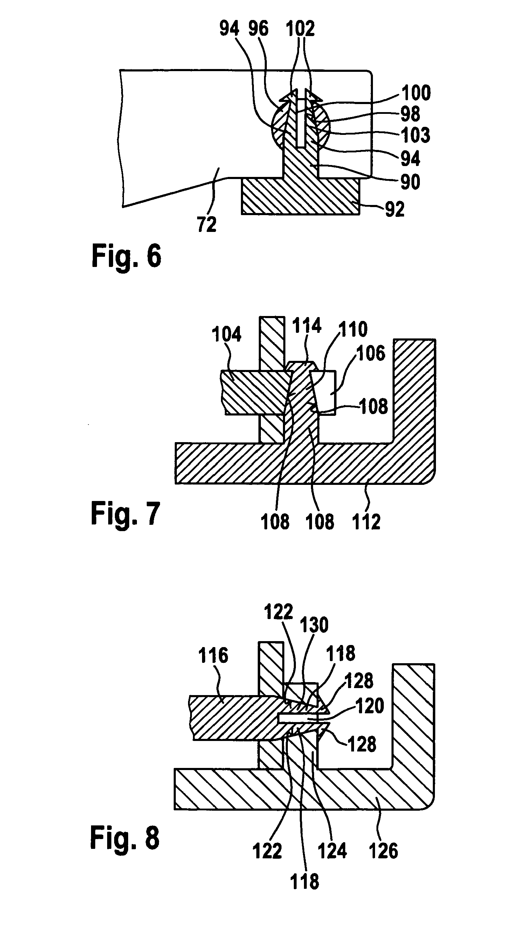

Alternative embodiments for the coupling between extractor 24 and clamping member 50 are shown in Fig. 6-8. In a second embodiment of the invention shown in Fig. 6, the materials used to construct these elements is similar. A fastening portion 90 of a modified extractor 92 is bifurcated into two arm portions 94, but rather than surrounding and gripping modified clamping member 96, they are themselves conically shaped so as to be complementary with a conically shaped inner surface 98 in clamping member 96 that they can pass through. A gap 100 between the arm portions 94 allows flexibility during assembly and dual head portions 102 secure the fit, so that inner surface 98 abuts and surrounds arm portions 94 which together comprise a neck portion 103 comparable with the neck portion 76 of the first embodiment.

In a third and fourth embodiment of the invention shown in Figs. 7 and 8 respectively, the materials used for extractor and clamping member may be reversed, such that the clamping member is a flexible material and the extractor may be a rigid material. The third embodiment is similar in principal to the first one, in so far as modified clamping member 104 has flexible arm portions 106 with a conically shaped inner surface 108 which abuts and grips a conically shaped neck portion 110 of extractor 112 adjacent a head portion 114. The fourth embodiment is similar in principal to the second embodiment in so far as a modified clamping member 116 has two flexible arm portions 118 with a gap 120 between them. The conical shape of arm portions 118 correspond to the conically shaped inner surface 122 of a fastening portion 124 of extractor 126 which abuts and grips clamping member 116 while dual head portions 128 secure the fit. As is the case in the second embodiment, arm portions 118 together comprise a neck portion 130.

In all four illustrated embodiments, the extractor and clamping member are complementary in shape so that there is a rigid coupling. The shape is such that the parts abut each other and preferably have slight difference in shape so that there is friction between the parts and a gripping action upon assembly.

In the first and fourth embodiments, movement of the respective extractors 24 or 126 in direction 28 will exert a force upon the respective head portions 74 and 128 of the respective clamping members 50 and 116. In the second and third embodiments, the respective extractors 92 and 110 pass through the respective clamping members 96 and 116. In both cases the clamping member has additional portions that function similarly to the head portions of the other embodiments in so far as they receive a force from extractors 92 and 110 when a user utilizes the tool retention mechanism.

## Claims

1. An electrical device having a tool retention assembly comprising:
a tool holder (32) which defines a channel (46) for insertion of a tool (18) along an insertion axis (48);
a clamping member (50) adjustable along a clamping axis (52) that is oriented perpendicular to the insertion axis (48), wherein the clamping member (50) in a retaining position passes through the channel (46) for retaining a tool (18) inserted into the holder and wherein the clamping member (50) in a releasing position does not pass through the channel (46) so that a tool (18) can be inserted or removed from the holder (32);
a biasing member (60) for urging the clamping member (50) into the retaining position;
an extractor (24) coupled to the clamping member (50) for moving the clamping member (50) from the retaining position into the releasing position;
**characterized in that** one of the extractor (24, 112) and the clamping member (50, 104) has a neck portion (76, 110) narrower than an adjacent head portion (74, 114) and the other one of the extractor (24, 112) and the clamping member (50, 104) has an inner surface (82, 108) having a complementary shape to the neck portion (76, 110) which abuts the neck portion (76, 110).

2. An electrical device according to claim 1, **characterized in that** the inner surface (82, 108) is provided on two flexible arms (78, 106) each of which abut the neck portion (76, 110).

3. An electrical device according to claim 2, **characterized in that** the extractor (24) has two flexible arms (78) that abut the neck portion (76) of the clamping member (50).

4. An electrical device according to claim 1, **characterized in that** the neck portion (103, 130) comprises two flexible arms (94, 118) each of which abut the inner surface (98, 122).

5. An electrical device according to claim 4, **characterized in that** the extractor (92) has two flexible arms (94) that pass though the clamping member (96).

6. An electrical device according to any one of claims 1 to 4, **characterized in that** the clamping member (50) has the neck portion (76) and the head portion (74) and the extractor (24) has the inner surface (82).

7. An electrical device according to any one of claims 1, 2, 4 or 5, **characterized in that** the extractor (112) has the neck portion (110) and the head portion (114) and the clamping member (104) has the inner surface (108).

8. An electrical device according to any one of the preceding claims, **characterized in that** the inner surface (82) substantially surrounds the neck portion (76).

9. An electrical device according to any one of the preceding claims, **characterized in that** the neck portion (76) has a substantially conical shape.

10. An electrical device according to any one of the preceding claims, **characterized in that** the angle (84) formed by the conically shaped neck portion (86) is approximately 16 degrees.

11. An electrical device according to claim 10, **characterized in that** when the extractor (24) is used to move the clamping member (50), the extractor (24) applies a force against a head portion (74) of the clamping member (50).

## Patentansprüche

1. Elektrische Vorrichtung, die eine Werkzeughalteanordnung besitzt, mit:
einem Werkzeughalter (32), der einen Kanal (46) zum Einsetzen eines Werkzeugs (18) längs einer Einsetzachse (48) definiert;
einem Klemmelement (50), das längs einer Klemmachse (52) einstellbar ist, die senkrecht zu der Einsetzachse (48) orientiert ist, wobei das Klemmelement (50) in einer Halteposition durch den Kanal (46) verläuft, um ein in den Halter eingesetztes Werkzeug (18) zu halten, und wobei das Klemmelement (50) in einer Freigabeposition nicht durch den Kanal (46) verläuft, so dass ein Werkzeug (18) in den Halter (32) eingesetzt oder daraus entnommen werden kann;
einem Vorbelastungselement (60), um das Klemmelement (50) in die Halteposition zu drängen; und
einem Extrahierer (24), der mit dem Klemmelement (50) gekoppelt ist, um das Klemmelement (50) aus der Halteposition in die Freigabeposition zu bewegen;
**dadurch gekennzeichnet, dass** der Extrahierer (24, 112) oder das Klemmelement (50, 104) einen Halsabschnitt (76, 110) besitzt, der schmäler als ein benachbarter Kopfabschnitt (74, 114) ist, und der/das Andere des Extrahierers (24, 112) und des Klemmelements (50, 104) eine innere Oberfläche (82, 108) besitzt, die eine zu dem Halsabschnitt (76, 110) komplementäre Form besitzt, die an dem Halsabschnitt (76, 110) anliegt.

2. Elektrische Vorrichtung nach Anspruch 1, **dadurch gekennzeichnet, dass** die innere Oberfläche (82, 108) an zwei flexiblen Armen (78, 106) vorgesehen ist, wovon jeder an dem Halsabschnitt (76, 110) anliegt.

3. Elektrische Vorrichtung nach Anspruch 2, **dadurch gekennzeichnet, dass** der Extrahierer (24) zwei flexible Arme (78) besitzt, die an dem Halsabschnitt (76) des Klemmelements (50) anliegen.

4. Elektrische Vorrichtung nach Anspruch 1, **dadurch gekennzeichnet, dass** der Halsabschnitt (103, 130) zwei flexible Arme (94, 118) aufweist, wovon jeder an der inneren Oberfläche (98, 122) anliegt.

5. Elektrische Vorrichtung nach Anspruch 4, **dadurch gekennzeichnet, dass** der Extrahierer (92) zwei flexible Arme (94) besitzt, die durch das Klemmelement (96) verlaufen.

6. Elektrische Vorrichtung nach einem der Ansprüche 1 bis 4, **dadurch gekennzeichnet, dass** das Klemmelement (50) den Halsabschnitt (76) und den Kopfabschnitt (74) besitzt und der Extrahierer (24) die innere Oberfläche (82) besitzt.

7. Elektrische Vorrichtung nach einem der Ansprüche 1, 2, 4 oder 5, **dadurch gekennzeichnet, dass** der Extrahierer (112) den Halsabschnitt (110) und den Kopfabschnitt (114) besitzt und das Klemmelement (104) die innere Oberfläche (108) besitzt.

8. Elektrische Vorrichtung nach einem der vorhergehenden Ansprüche, **dadurch gekennzeichnet, dass** die innere Oberfläche (82) den Halsabschnitt (76) im Wesentlichen umgibt.

9. Elektrische Vorrichtung nach einem der vorhergehenden Ansprüche, **dadurch gekennzeichnet, dass** der
Halsabschnitt (76) eine im Wesentlichen konische Form besitzt.

10. Elektrische Vorrichtung nach einem der vorhergehenden Ansprüche, **dadurch gekennzeichnet, dass** der Winkel (84), der durch den konisch geformten Halsabschnitt (86) gebildet wird, etwa 16 Grad beträgt.

11. Elektrische Vorrichtung nach Anspruch 10, **dadurch gekennzeichnet, dass** der Extrahierer (24) dann, wenn er verwendet wird, um das Klemmelement (50) zu bewegen, eine Kraft auf einen Kopfabschnitt (74) des Klemmelements (50) ausübt.

## Revendications

1. Dispositif électrique équipé d'un ensemble de retenue d'outil, comprenant:
un support d'outil (32) qui définit un canal (46) destiné à l'insertion d'un outil (18) le long d'un axe d'insertion (48);
un élément de serrage (50) qui peut être réglé le long d'un axe de serrage (52) qui est orienté perpendiculairement à l'axe d'insertion (48), dans lequel l'élément de serrage (50), dans une position de retenue, passe à travers le canal (46) pour retenir un outil (18) qui est inséré dans le support, et dans lequel l'élément de serrage (50), dans une position relâchée, ne passe pas à travers le canal (46), de telle sorte qu'un outil (18) puisse être inséré dans le support (32) ou extrait de celui-ci;
un élément de poussée (60) pour pousser l'élément de serrage (50) dans la position de retenue;
un extracteur (24) qui est couplé à l'élément de serrage (50) pour déplacer l'élément de serrage (50) de la position de retenue à la position relâchée;
**caractérisé en ce qu'**un composant parmi l'extracteur (24, 112) et l'élément de serrage (50, 104) comporte une partie de col (76, 110) qui est plus étroite qu'une partie de tête voisine (74, 114), et l'autre composant parmi l'extracteur (24, 112) et l'élément de serrage (50, 104) présente une surface intérieure (82, 108) dont la forme est complémentaire à celle de la partie de col (76, 110) et qui vient buter contre la partie de col (76, 110).

2. Dispositif électrique selon la revendication 1, **caractérisé en ce que** la surface intérieure (82, 108) est pourvue de deux bras flexibles (78 106), chacun de ceux-ci butant contre la partie de col (76, 110).

3. Dispositif électrique selon la revendication 2, **caractérisé en ce que** l'extracteur (24) est pourvu de deux bras flexibles (78) qui butent contre la partie de col (76) de l'élément de serrage (50).

4. Dispositif électrique selon la revendication 1, **caractérisé en ce que** la partie de col (103, 130) est pourvue de deux bras flexibles (94, 118), chacun de ceux-ci butant contre la surface intérieure (98, 122).

5. Dispositif électrique selon la revendication 4, **caractérisé en ce que** l'extracteur (92) est pourvu de deux bras flexibles (94) qui passent à travers l'élément de serrage (96).

6. Dispositif électrique selon l'une quelconque des revendications 1 à 4, **caractérisé en ce que** l'élément de serrage (50) présente la partie de col (76) et la partie de tête (74), et l'extracteur (24) présente la surface intérieure (82).

7. Dispositif électrique selon l'une quelconque des revendications 1, 2, 4 ou 5, **caractérisé en ce que** l'extracteur (112) présente la partie de col (110), et la partie de tête (114), et l'élément de serrage (104) présente la surface intérieure (108).

8. Dispositif électrique selon l'une quelconque des revendications précédentes, **caractérisé en ce que** la surface intérieure (82) entoure sensiblement la partie de col (76).

9. Dispositif électrique selon l'une quelconque des revendications précédentes, **caractérisé en que** la partie de col (76) présente une forme sensiblement conique.

10. Dispositif électrique selon l'une quelconque des revendications précédentes, **caractérisé en ce que** l'angle (84) qui est formé par la partie de col de forme conique (86) est approximativement égal à 16 degrés.

11. Dispositif électrique selon la revendication 10, **caractérisé en ce que**, lorsque l'extracteur (24) est utilisé pour déplacer l'élément de serrage (50), l'extracteur (24) applique une force contre une partie de tête (74) de l'élément de serrage (50).
